Europäisches Patentamt

European Patent Office

Office européen des brevets

(11) Veröffentlichungsnummer: **0 315 791**
**A1**

## EUROPÄISCHE PATENTANMELDUNG

(21) Anmeldenummer: 88117069.0

(22) Anmeldetag: 14.10.88

(51) Int. Cl.⁴: **B65D 90/24 , B65G 1/02 , B65G 13/11**

(30) Priorität: 09.11.87 DE 8714909 U

(43) Veröffentlichungstag der Anmeldung:
17.05.89 Patentblatt 89/20

(84) Benannte Vertragsstaaten:
AT BE CH DE FR GB IT LI LU NL SE

(71) Anmelder: **HOFFMANN INDUSTRIEBAU GMBH**
**Triftenstrasse 115**
**D-4937 Lage/Lippe(DE)**

(72) Erfinder: **Becher, Dietmar**
**Alter Schulweg 17a**
**D-4937 Lage(DE)**

(74) Vertreter: **Patentanwälte TER MEER - MÜLLER**
**- STEINMEISTER**
**Artur-Ladebeck-Strasse 51**
**D-4800 Bielefeld 1(DE)**

(54) Vorrichtung zum Transport von Flüssigkeitsbehältern auf einem Rollgang.

(57) Eine Vorrichtung zum Transport von Flüssigkeitsbehältern auf einem Rollgang umfaßt eine flüssigkeitsdichte langgestreckte Wanne (24), in deren längsseitigen Wänden (26) die den Rollgang bildenden Laufrollen (28) gelagert sind. Durch diese Konstruktion wird ein zuverlässiger Leckschutz während des Transports der Flüssigkeitsbehälter gewährleistet.

Fig. 3

## VORRICHTUNG ZUM TRANSPORT VON FLÜSSIGKEITSBEHÄLTERN AUF EINEM ROLLGANG

Die Erfindung betrifft eine Vorrichtung zum Transport von Flüssigkeitsbehältern auf einem Rollgang.

Rollgänge werden üblicherweise zum Transport von Behältern wie Kartons, Fässern oder dergleichen über kurze Strecken beispielsweise beim Be- und Entladen von Fahrzeugen oder beim Ein- und Auslagern von Gütern in einem Regallager oder dergleichen eingesetzt. Herkömmliche Rollgänge weisen ein rahmenförmiges Gestell auf, in dem eine größere Anzahl von Laufrollen gelagert ist. Die Laufrollen sind mit im wesentlichen parallel verlaufenden Drehachsen nebeneinander in einer Ebene angeordnet und bilden eine Förderbahn für die zu transportierenden Gegenstände.

Wenn auf einem derartigen Rollgang Flüssigkeitsbehälter transportiert werden, so besteht die Gefahr, daß bei einem Leck in einem der Behälter Flüssigkeit ausläuft oder daß - bei der Handhabung offener Behälter - die Flüssigkeit während des Transports aus den Behältern herausspritzt oder herausschwappt. Die in dieser Weise unkontrolliert austretende Flüssigkeit führt nicht nur zu einer Verunreinigung des Arbeitsplatzes, sondern kann je nach ihrer chemischen Konsistenz auch ernste Umweltschäden hervorrufen.

Der Erfindung liegt daher die Aufgabe zugrunde, eine Vorrichtung zum Transport von Flüssigkeitsbehältern auf einem Rollgang zu schaffen, die es gestattet, Leckflüssigkeit oder Spritzflüssigkeit zuverlässig aufzufangen.

Erfindungsgemäße Lösungen dieser Aufgabe ergeben sich aus den unabhängigen Schutzansprüchen 1 und 7. Vorteilhafte Weiterbildungen und Ausgestaltungen der Erfindung sind in den abhängigen Schutzansprüchen angegeben.

Im folgenden werden bevorzugte Ausführungsbeispiele der Erfindung anhand der Zeichnungen näher erläutert.

Es zeigen:

Fig. 1 eine Auffangwanne für den Transport von Flüssigkeitsbehältern auf einem Rollgang;

Fig. 2 einen Schnitt durch eine erfindungsgemäße Transportvorrichtung mit einem Rollgang; und

Fig. 3 einen Längsschnitt durch eine abgewandelte Ausführungsform der Vorrichtung gemäß Figur 2.

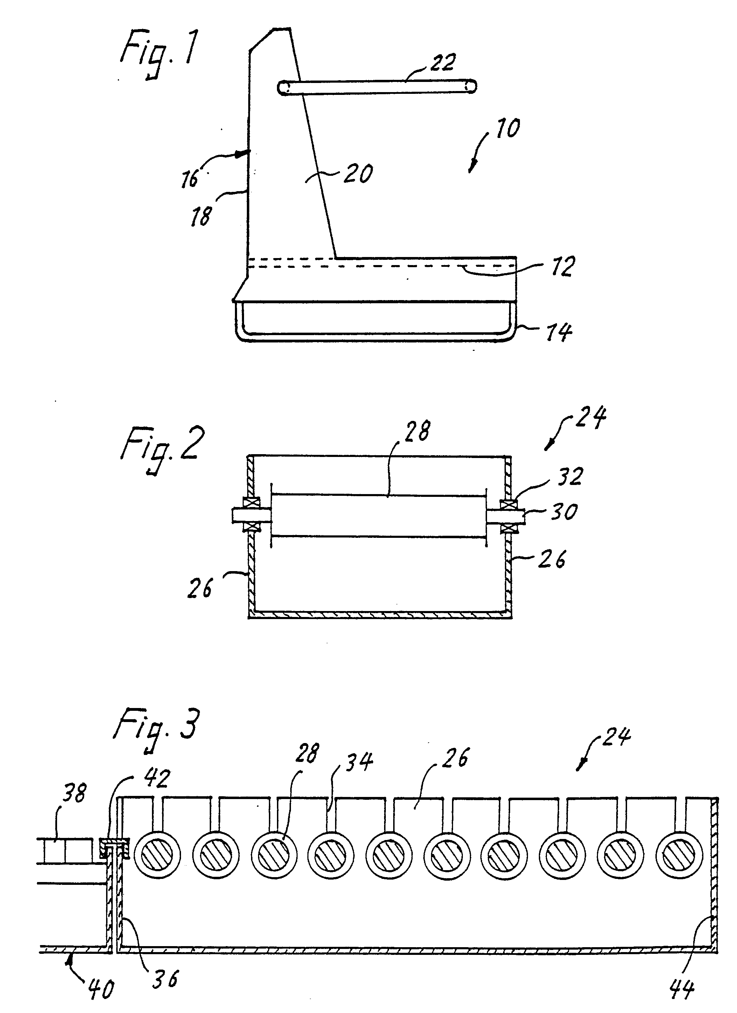

Figur 1 zeigt eine flache, palettenartige Auffangwanne 10. Die obere Öffnung der Auffangwanne ist durch einen Gitterrost 12 abgedeckt, auf dem nicht gezeigte Flüssigkeitsbehälter abgestellt werden können. An der Unterseite der Auffangwanne 10 sind zwei parallel in Abstand zueinander verlaufende Kufen 14 vorgesehen. Die Kufen sind als U-förmige Bügel mit abgerundeten Ecken ausgebildet.

Die Kufen ermöglichen es einerseits, die Auffangwanne 10 nach Art einer Palette von allen Seiten her mit der Gabel eines Gabelstaplers zu unterfahren. Andererseits ermöglichen es die Kufen 14 jedoch auch, die gesamte Auffangwanne 10 auf einem Rollgang zu transportieren. Die in Transportrichtung verlaufenden Kufen 14 stützen sich dabei jeweils auf mehreren Laufrollen des Rollgangs ab, so daß ein sicherer Stand der Auffangwanne auf dem Rollgang und ein weitgehend erschütterungsfreier Transport gewährleistet ist.

Die Auffangwanne ist an einer Seite mit einem Schutzschild 16 versehen, der eine Stirnwand 18 sowie kurze, um die Ecken der Auffangwanne 10 herumgezogene Seitenwände 20 aufweist. Die Auffangwanne 10 wird vorzugsweise in einer solchen Stellung auf dem Rollgang transportiert, daß die mit dem Schutzschild 16 versehene Seite vorausläuft. Durch den Schutzschild werden die auf der Auffangwanne abgestellten Flüssigkeitsbehälter gestützt und gesichert, so daß sie auch bei einem abrupten Bremsen der Auffangwanne oder auf Gefällstrecken nicht umstürzen. Darüber hinaus gewährleistet der Schutzschild 16, daß Leckflüssigkeit bei einer Beschädigung der Behälter oder aus offenen Behältern herausschwappende Spritzflüssigkeit in der Auffangwanne zurückgehalten wird. Zur zusätzlichen Sicherung der Behälter ist an dem Schutzschild 16 ein Halter 22, beispielsweise in Form eines schwenkbar gelagerten Bügels angebracht.

Die Flüssigkeitsbehälter können ständig auf den zugehörigen Auffangwannen 10 verbleiben und gemeinsam mit den Auffangwannen aus einem Lager entnommen und über den Rollgang auf die Stellfläche eines Transportfahrzeugs überführt werden. Hierdurch werden Be- und Entladevorgänge vereinfacht, und es ist ein ununterbrochener Leckschutz gewährleistet. Auf dem Transportfahrzeug und dem Lager können die Auffangwannen so orientiert werden, daß durch die Schutzschilde 16 der Auffangwannen ein Schutz gegen Beschädigung der Flüssigkeitsbehälter, ein Schutz gegen Herabstürzen der Behälter sowie ein Schutz gegen aus einem Leck eines Behälters ausspritzende Flüssigkeit gewährleistet ist.

Während bei der Lösung gemäß Figur 1 die Flüssigkeitsbehälter auf eine Auffangwanne gestellt werden, die ihrerseits auf einem herkömmlichen Rollgang transportiert wird, zeigen Figuren 2 und 3 eine Alternativlösung, bei der der Rollgang insgesamt als Auffangwanne ausgebildet ist.

Figur 2 zeigt eine langgestreckte flüssigkeitsdichte Wanne 24, in deren längsseitigen Wänden 26 die den Rollgang bildenden Laufrollen 28 mit Achsstummeln 30 gelagert sind. Die Wände der Wanne 24 sind nach oben über die Ebene der Laufrollen 28 hinaus verlängert und an den Lagerstellen der Achsstummel 30 durch flüssigkeitsdichte Lager 32 abgedichtet, so daß ein relativ großes flüssigkeitsdichtes Auffangvolumen für Leck- oder Spritzflüssigkeit gebildet wird.

Figur 3 zeigt eine abgewandelte Ausführungsform der Wanne 24, bei der die längsseitigen Wände 26 mit vertikalen Schlitzen 34 zur lösbaren Aufnahme der Achsstummel der Laufrollen 28 versehen sind. In diesem Fall wird das Auffangvolumen nur durch den unterhalb der Laufrollen 28 gelegenen Teil der Wanne 24 gebildet, während die über die Ebene der Laufrollen hinausragenden Wandabschnitte lediglich einen Spritzschutz bilden.

Eine Stirnwand 36 der Wanne 24 endet in Höhe der Laufrollen 28, so daß die auf den Laufrollen transportierten Güter unmittelbar an einen anschließenden gleichartigen Rollgang oder auf eine als Lager dienende, durch einen Gitterrost 38 abgedeckte Auffangwanne 40 übergeben werden können. Die Fuge zwischen der Rollgang-Wanne 24 und der Auffangwanne 40 ist mit Hilfe einer umgekehrt U-förmigen Schiene 42 abgedichtet.

Wahlweise kann auch die gegenüberliegende Stirnwand 44 der Rollgang-Wanne 24 abgesenkt sein, so daß durch die Rollgang-Wannen ein gegen das Auslaufen von Leckflüssigkeit gesicherter Rollgang beliebiger Länge gebildet werden kann.

Besonders vorteilhaft ist eine Kombination aus Auffangwannen 10 gemäß Figur 1 und Rollgang-Wannen 24 gemäß Figuren 2 und 3. Innerhalb eines beispielsweise durch ein Palettenregallager gebildeten Lagersystems werden zur Lagerung und zum Transport der Flüssigkeitsbehälter die Auffangwannen 10 verwendet, so daß innerhalb des Lagersystems ein Transport auf normalen, nicht durch Auffangwannen geschützten Rollgängen möglich ist. An den Stellen, an denen die einzulagernden Flüssigkeitsbehälter einzeln angeliefert oder abgefüllt werden oder an denen die auszulagernden Flüssigkeitsbehälter zu den jeweiligen Verbrauchern weitertransportiert werden, sind Rollgang-Wannen der in Figuren 2 und 3 gezeigten Art an die ungeschützten Rollgänge angeschlossen. Zur zusätzlichen Absicherung der Umschlagplätze, an denen die Flüssigkeitsbehälter von den Auffangwannen 10 auf die Rollgang-Wannen 24 umgeladen werden oder umgekehrt, kann der Boden unterhalb der Rollgänge und Rollgang-Wannen mit begehbaren Auffangwannen ausgelegt sein, die eine der in Figur 3 gezeigten Auffangwanne 40 entsprechende Konstruktion aufweisen.

## Ansprüche

1. Vorrichtung zum Transport von Flüssigkeitsbehältern auf einem Rollgang, **gekennzeichnet** durch eine flüssigkeitsdichte langgestreckte Wanne (24), in deren längsseitigen Wänden (26) die den Rollgang bildenden Laufrollen (28) gelagert sind.

2. Vorrichtung nach Anspruch 1, dadurch **gekennzeichnet**, daß die Laufrollen (28) flüssigkeitsdicht in den Wänden (26) der Wanne (24) gelagert sind.

3. Vorrichtung nach Anspruch 1, dadurch **gekennzeichnet**, daß die Laufrollen (28) mit Achsstummeln (30) lösbar in von den oberen Rändern der längsseitigen Wände (26) der Wanne (24) ausgehenden vertikalen Schlitzen (34) angeordnet sind.

4. Vorrichtung nach einem der Ansprüche 1 bis 3, dadurch **gekennzeichnet**, daß wenigstens eine Stirnwand (36) der Wanne (24) in Höhe der Laufrollen (28) endet.

5. Vorrichtung nach Anspruch 4, **gekennzeichnet** durch eine umgekehrt U-förmige, den oberen Rand der Stirnwand (36) übergreifende Schiene (42) zur flüssigkeitsdichten Verbindung der den Rollgang bildenden Wanne (24) mit einer weiteren Wanne (40).

6. Vorrichtung nach Anspruch 1, **gekennzeichnet** durch eine mit einem Gitterrost (12) zum Abstellen der Flüssigkeitsbehälter abgedeckte, an der Unterseite mit Kufen (14) versehene Auffangwanne (10) für Leck-oder Spritzflüssigkeit.

7. Vorrichtung zum Transport von Flüssigkeitsbehältern auf einem Rollgang, **gekennzeichnet** durch eine mit einem Gitterrost (12) zum Abstellen der Flüssigkeitsbehälter abgedeckte, an der Unterseite mit Kufen (14) versehene Auffangwanne (10) für Leck- oder Spritzflüssigkeit.

8. Vorrichtung nach Anspruch 7, dadurch **gekennzeichnet**, daß die Kufen (14) als U-förmige Bügel ausgebildet sind.

9. Vorrichtung nach Anspruch 7 oder 8, **gekennzeichnet** durch einen Halter (22) zur Lagesicherung der auf der Auffangwanne (10) abgestellten Flüssigkeitsbehälter.

10. Vorrichtung nach einem der Ansprüche 7 bis 9, dadurch **gekennzeichnet**, daß an wenigstens einer rechtwinklig zu den Kufen (14) verlaufenden Seite der Auffangwanne (10) ein aufragender Schutzschild (16) zum Auffangen von Spritzflüssigkeit und zur Ableitung der Spritzflüssigkeit in die Auffangwanne (10) angeordnet ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 023 084 (SCHULZE-BERGE) * Insgesamt * | 1-4 | B 65 D 90/24 |
| Y | | 5-10 | B 65 G 1/02 |
| | --- | | B 65 G 13/11 |
| Y | CH-A- 595 261 (PERREN) * Insgesamt * | 5 | |
| A | | 1-4 | |
| | --- | | |
| Y | CH-A- 543 430 (STECK) * Insgesamt * ----- | 6-10 | |

| | |
|---|---|
| | **RECHERCHIERTE SACHGEBIETE (Int. Cl.4)** |
| | B 65 D B 65 G |

Der vorliegende Recherchenbericht wurde für alle Patentansprüche erstellt

| Recherchenort | Abschlußdatum der Recherche | Prüfer |
|---|---|---|
| DEN HAAG | 24-01-1989 | WERNER D.M. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
   Dokument